(19) Europäisches Patentamt
European Patent Office
Office européen des brevets

(11) EP 1 661 958 A1

(12) EUROPEAN PATENT APPLICATION

(43) Date of publication:
**31.05.2006 Bulletin 2006/22**

(51) Int Cl.:
***C09D 11/00*** *(2006.01)*

(21) Application number: **05025881.3**

(22) Date of filing: **28.11.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **30.11.2004 JP 2004346645**

(71) Applicant: **FUJI PHOTO FILM CO., LTD.**
**Minami-Ashigara-shi, Kanagawa (JP)**

(72) Inventors:
- **Aoshima, Keitaro c/o Fuji Photo Film Co.,Ltd.**
**Haibara-gun**
**Shizuoka (JP)**
- **Sakasai, Yutaka c/o Fuji Photo Film Co.,Ltd.**
**Haibara-gun**
**Shizuoka (JP)**

(74) Representative: **HOFFMANN EITLE**
**Patent- und Rechtsanwälte**
**Arabellastrasse 4**
**81925 München (DE)**

(54) **Process for producing ink composistion**

(57) A process for producing an ink composition containing a dispersing medium and particles containing a colorant and a polymer, the process comprising: wet dispersing the colorant and the polymer in the dispersing medium at a temperature of lower than 10°C.

EP 1 661 958 A1

## Description

### FIELD OF THE INVENTION

This invention relates to a process of producing an ink composition.

### BACKGROUND OF THE INVENTION

Image recording methods of forming an image on a recording medium such as paper based on image data signals include electrophotography, dye sublimation or hot-melt thermal transfer, and inkjet recording. The electrophotographic image formation requires a process for uniformly charging a photoreceptor drum and imagewise exposing the drum to form an electrostatic latent image, which makes the system complicated and expensive. The thermal transfer systems use inexpensive equipment, but the use of ink ribbons increases the running cost and involves production of waste material. The inkjet recording is an excellent image recording system because of the following advantages. The equipment is inexpensive. The running cost is low because ink is ejected directly onto only a necessary image area of a recording medium to form an image so that the ink is efficiently used. The noise is low.

Inkjet recording includes a system in which ink drops are made to fly by the pressure of a vapor bubble generated by the heat of a heating element, a system in which ink drops are made to fly by mechanical pressure pulses generated by a piezoelectric element, and a system in which ink drops containing charged parts are allowed to fly by making use of an electrostatic field (hereinafter "electrostatic inkjet recording system") (see U.S. Patent 6,158,844 and Japanese Patent 3315334). The systems using vapor or mechanical pressure to eject ink drops are incapable of controlling the drop flying direction. Therefore, distortion of an ink nozzle or air convection can interfere with the ink drop's landing precisely at a desired position on a recording medium.

In the electrostatic inkjet recording system, on the other hand, ink droplets land precisely at a desired position because the flying direction is electrostatically controlled. The electrostatic inkjet recording system is therefore excellent in capability of providing high quality images (prints).

Ink compositions containing a dispersing medium and charged particles containing at least a colorant are used in electrostatic inkjet recording (see U.S. Patent 5,952,048 and JP-A-8-291267). Colorant-containing ink formulations are designed to provide a yellow, a magenta, a cyan, and a black color ink composition. Spot colors, such as gold and silver, are also formulated. The colorant-containing ink compositions are useful to provide a full-color image or print.

### SUMMARY OF THE INVENTION

An ink composition used in inkjet recording is generally prepared by kneading a colorant and a polymer under heat, dry grinding the blend into powder, dispersing the powder in a dispersing medium together with a dispersing agent, and adding a charge control agent to the dispersion to impart electrical charges to the dispersed particles. A conventional ink composition thus prepared often causes a nozzle clogging problem due to adhesion of solid particles to the inkjet head nozzle of an inkjet recording apparatus. A conventional ink composition also has poor storage stability when stored for a long time. That is, the particles settle down and are not re-dispersed even if agitated.

As stated, an ink composition for inkjet recording is usually produced by a process including the step of wet dispersing dry-ground particles in a dispersing medium together with a dispersing agent. In the wet dispersing step, the particles are broken into primary particles of a colorant (pigment) or separated along the interface between the pigment and the polymer. It follows that the pigment is exposed on the particle surface or that the pigment is released alone in the dispersion. As a result, interaction occurs between the broken particles to adversely influence the ink ejection performance and ink storage stability.

Accordingly, an object of the present invention is to provide a process of producing an ink composition free from the above-described problems. More specifically, it is an object of the present invention to provide an ink composition in which the interaction between particles is suppressed. When used as inkjet ink, such an ink composition hardly allows the particles to adhere to inkjet head nozzles and exhibits improved storage stability.

As a result of extensive investigation, the present inventors have found that when the step of wet dispersing is conducted at temperatures lower than 10°C, brittleness of the polymer increases so that breakage of the polymer is accelerated. It follows that exposure of the pigment and release of the pigment in the wet dispersing step are minimized.

The present invention provides a process of producing an ink composition comprising a dispersing medium and particles containing a colorant and a polymer. The process includes the step of wet dispersing the colorant and the polymer in the dispersing medium at a temperature lower than 10°C.

The present invention also provides a process of producing an ink composition further including the step of heating the dispersion from the step of wet dispersing.

By the process of the invention, the interaction between the particles present in the ink composition is suppressed. Where applied to an inkjet recording apparatus, the ink composition hardly causes the particles thereof to adhere to the inkjet head nozzles of the apparatus and exhibits improved storage stability.

## BRIEF DESCRIPTION OF THE DRAWINGS

Fig. 1 is an overall constructional view schematically illustrating an example of an inkjet recording apparatus used in the invention.
Fig. 2 is a perspective view illustrating the configuration of an inkjet head of an inkjet recording apparatus used in the invention. For the sake of easy understanding, the edge of guard electrodes in each ejection part is not depicted.
Fig. 3 is a cross-sectional view of the inkjet head of Fig. 2 taken along line X-X, showing the distribution of charged particles where many ejection parts of the inkjet head are used.

## DETAILED DESCRIPTION OF THE INVENTION

The dispersing medium that can be used in the invention is preferably a dielectric liquid having high electrical resistance, specifically a volume resistivity of $10^{10}$ Ωcm or higher. A low resistance dispersing medium is unsuited for use in the present invention because it would allow electrical connection between adjacent recording electrodes. The dielectric liquid preferably has a dielectric constant of 5 or less, more preferably 4 or less, even more preferably 3.5 or less. When the dispersing medium has a dielectric constant falling within the above range, an electric field effectively acts on the charged particles in the ink composition.

The dispersing medium that can be used in the invention include straight-chain or branched aliphatic hydrocarbons, alicyclic hydrocarbons, aromatic hydrocarbons, halogen-substituted derivatives of these hydrocarbons, and siliconeoils. Examples are hexane, heptane, octane, isooctane, decane, isodecane, decaline, nonane, dodecane, isododecane, cyclohexane, cyclooctane, cyclodecane, toluene, xylene, mesitylene, Isopar C, E, G, H, L, and M (available from Exxon Chemicals) , Shellsol 70 and 71 (available Shell Oil Co.), and Amsco OMS and 460 (available from Spirits Co.). These media can be used either individually or as a mixture of two or more thereof. The amount of the dispersing medium in the ink composition is preferably 20% or more to sufficiently disperse colorant-containingparticles and 99% by weight or less to secure a sufficient amount of the colorant.

The colorant that can be used in the invention is selected from known dyes and pigments according to the use and the purpose. For example, pigments are preferred when weight is put on color tones of recorded or printed images. For the details, reference can be made in *Ganryo Bunsan Anteika to Hyomensyorigijutu Hyouka*, 1st ed., Technical Information Institute Co., Ltd., 2001 (hereinafter referred to as reference-1). Yellow, magenta, cyan, and black inks can be formulated by using the respective pigments. It is preferred to use pigments for offset printing or proofs to enjoy color tones similar to those of offset printed materials.

Examples of pigments for yellow ink include monoazo pigments, such as C.I. Pigment Yellow 1 and C.I. Pigment Yellow 74; disazo pigments, such as C.I. Pigment Yellow 12 and C.I. Pigment Yellow 17; non-benzidine azo pigments, such as C.I. Pigment Yellow 180; azo lake pigments, such as C.I. Pigment Yellow 100; condensed azo pigments, such as C.I. Pigment Yellow 95; acid dye lake pigments, such as C.I. Pigment Yellow 115; basic dye lake pigments, such as C.I. Pigment Yellow 18; anthraquinone pigments, such as Flavanthrone Yellow; isoindolinone pigments, such as Isoindolinone Yellow 3RLT; quinophthalone pigments, such as Quinophthalone Yellow; isoindoline pigments, such as Isoindoline Yellow; nitroso pigments, such as C.I. Pigment Yellow 153; metal complex azomethine pigments, such as C.I. Pigment Yellow 117; and isoindolinone pigments, such as C.I. Pigment Yellow 139.

Examples of the pigments for magenta ink include monoazo pigments, such as C.I. Pigment Red 3; disazo pigments, such as C.I. Pigment Red 38; azo lake pigments, such as C.I. Pigment Red 53:1 and C.I. Pigment Red 57:1; condensed azo pigments, such as C.I. Pigment Red 144; acid dye lake pigments, such as C.I. Pigment Red 174; basic dye lake pigments, such as C.I. Pigment Red 81; anthraquinone pigments, such as C.I. Pigment Red 177; thioindigo pigments, such as C.I. Pigment Red 88; perinone pigments, such as C.I. Pigment Red 194; perylene pigments , such as C.I. Pigment Red 149; quinacridone pigments, such as C.I. Pigment Red 122; isoindolinone pigments, such as C.I. Pigment Red 180; and alizarin lake pigments, such as C.I. Pigment Red 83.

Examples of the pigments for cyan ink include disazo pigments, such as C.I. Pigment Blue 25; phthalocyanine pigments, such as C.I. Pigment Blue 15; acid dye lake pigments, such as C.I. Pigment Blue 24; basic dye lake pigments, such as C.I. Pigment Blue 1; anthraquinone pigments, such as C.I. Pigment Blue 60; and alkali blue pigments, such as, C.I. Pigment Blue 18.

Examples of the pigments for black ink include organic pigments, such as an aniline black pigment; an iron oxide pigment; and carbon black pigments, such as furnace black, lamp black, acetylene black and channel black.

Processed pigments represented by Microlith pigments, such as Microlith-A, -K and -T, are also preferably

used. Specific examples thereof include Microlith Yellow 4G-A, Microlith Red BP-K, Microlith Blue 4G-T and Microlith Black C-T.

According to the necessity, other various kinds of pigments, for example, calcium carbonate or titanium oxide as a pigment for white ink, aluminum powder for silver ink, and a copper alloy for gold ink can be used.

It is preferred in principle for a color ink composition to contain a single kind of a pigment for the color from the standpoint of simplicity of ink manufacture, but in some cases, two or more kinds of pigments are preferably used in combination. For instance, a phthalocyanine pigment may be mixed into carbon black to make a black ink. A pigment may be used after being subj ected to a surface treatment by a known method, for example, a rosin treatment (see reference-1 cited above).

The content of the colorant (pigment) in the whole ink composition is preferably in a range of from 0.1% to 50% by weight. The pigment content of 0.1% or more is sufficient to provide good color on printed materials. With the content of 50% or less, the particles containing the colorant can be dispersed in the dispersing medium in good condition. The content of the colorant is still preferably 1% to 30% by weight.

The colorant such as a pigment is dispersed into particles in a polymer-coated state. Coating with a polymer shields the charge possessed by the colorantperse, whereby desired charging characteristics can be imparted to the dispersed particles. Furthermore, when an ink image formed on a recording medium is fixed by heat with, for example, a heat roller, the coating polymer melts by the heat to achieve efficient fixation.

Examples of the coating polymer include rosin, rosin derivatives, rosin-modified phenol resins, alkyd resins, (meth)acrylic polymers, polyurethane, polyester, polyamide, polyethylene, polybutadiene, polystyrene, polyvinyl acetate, acetal-modified polyvinyl alcohol, and polycarbonate. Among them, polymers having a weight average molecular weight of 2,000 to 1,000,000 and a polydispersity index (weight average molecular weight/number average molecular weight) of 1.0 to 5.0 are preferred in view of ease in particle formation. Furthermore, polymers having one of a softening point, a glass transition point, and a melting point of from 40° to 120°C are preferred from the standpoint of ease of fixation.

Preferred coating polymers used in the invention include those having at least one of recurring units represented by the following formulae (1) to (4):

(1) 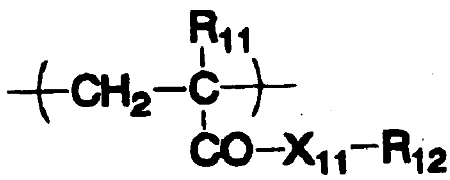

(2) 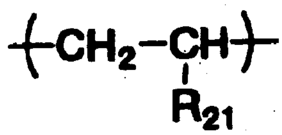

(3) 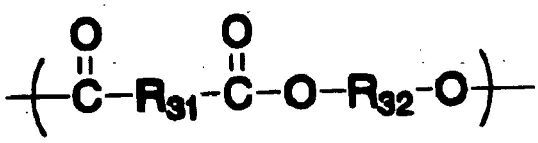

(4) 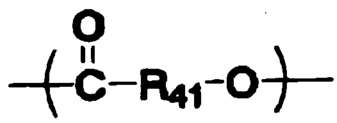

wherein $X_{11}$ represents an oxygen atom or -N ($R_{13}$) -; $R_{11}$ represents a hydrogen atom or a methyl group; $R_{12}$ represents a hydrocarbon group having 1 to 30 carbon atoms; $R_{13}$ represents a hydrogen atom or a hydrocarbon group having 1 to 30 carbon atoms; $R_{21}$ represents a hydrogen atom or a hydrocarbon group having 1 to 20 carbon atoms; $R_{31}$, $R_{32}$,

and $R_{41}$ each represent a hydrocarbon group having 1 to 20 carbon atoms; the hydrocarbon group as represented by $R_{12}$, $R_{21}$, $R_{31}$, $R_{32}$ or $R_{41}$ may contain an ether linkage, an amino group, a hydroxyl group or a halogen substituent.

The polymer having the recurring unit represented by formula (1) is obtained by radical polymerization of a corresponding radical polymerizable monomer in a known manner. Useful radical polymerizable monomers include (meth)acrylic esters, such as methyl (meth)acrylate, ethyl (meth)acrylate, propyl (meth)acrylate, butyl (meth)acrylate, hexyl (meth)acrylate, octyl (meth) acrylate, 2-ethylhexyl (meth) acrylate, dodecyl (meth)acrylate, stearyl (meth)acrylate, cyclohexyl (meth)acrylate, phenyl (meth)acrylate, benzyl (meth) acrylate, 2-hydroxyethyl (meth)acrylate, 2-(N,N-dimethylamino)ethyl (meth)acrylate, and 2- (N,N-diethylamino) ethyl (meth) acrylate; and (meth)acrylamides, such as N-methyl (meth)acrylamide, N-propyl(meth)acrylamide, N-phenyl(meth)acrylamide, and N,N-dimethyl(meth)acrylamide.

The polymer having the recurring unit represented by formula (2) can be obtained by radical polymerization of a corresponding radical polymerizable monomer in a known method. Examples of useful radical polymerizable monomers include ethylene, propylene, butadiene, styrene, and 4-methylstyrene.

The polymer having the recurring unit represented by formula (3) can be obtained by dehydration condensation of a corresponding dicarboxylic acid or an anhydride thereof with a diol in a known manner. The dicarboxylic acid and anhydride include succinic anhydride, adipic acid, sebacic acid, isophthalic acid, terephthalic acid, 1,4-phenylenediacetic acid, and diglycolic acid. The diol includes ethylene glycol, 1,2-propanediol, 1,3-propanediol, 1,4-butanediol, 1,6-hexanediol, 1,10-decanediol, 2-butene-1,4-diol, 1,4-cyclohexanediol, 1,4-cyclohexanedimethanol, 1,4-benzenedimethanol, and diethylene glycol.

The polymer having the recurring unit represented by formula (4) can be obtained by dehydration condensation of a corresponding carboxylic acid having a hydroxy group in a known manner or by ring-opening polymerization of a cyclic ester of a corresponding carboxylic acid having a hydroxy group according to a known method. Examples of the carboxylic acid having a hydroxy group and cyclic ester thereof include 6-hydroxyhexanoic acid, 11-hydroxyundecanpic acid, hydroxybenzoic acid, and ε-caprolactone.

The polymer containing at least one recurring unit represented by any one of formulae (1) to (4) may be a homopolymer of the unit represented by any one of formulae (1) to (4) or a copolymer with other constituting component. The coating polymers may be used individually or in combination of two or more thereof.

The content of the coating polymer in the whole ink composition is preferably in a range of from 0.1% to 40% by weight. The amount of 0.1% or more is sufficient to secure satisfactory fixing properties. With the polymer content being 40% or less, particles containing the colorant and the coating polymer can be produced in good condition.

In the present invention, a mixture of the colorant and the coating polymer is dispersed into particles in a dispersing medium. A dispersing agent is preferably used to control the particle size and to prevent the particles from settling.

Preferred dispersing agents include surface active agents typified by sorbitan fatty acid esters, such as sorbitan monooleate, and a polyethylene glycol fatty acid esters, such as polyoxyethylene distearate. Further included are styrene-maleic acid copolymers and amine-modified products thereof, (meth)acrylic polymers, ethylene-(meth)acryl compound copolymers, rosin, BYK-160, 162, 164 and 182 (trade names of polyurethane polymers available from BYK Chemie GmbH) , EFKA-401 and 402 (trade names of acrylic polymers available from EFKA), and Solsperse 17000 and 24000 (trade names of polyester polymers available from Zeneca). The polymeric dispersing agents preferably have a weight average molecular weight of 1,000 to 1, 000, 000 and a polydispersity index (weight average molecular weight/number average molecular weight) of 1.0 to 7.0 from the standpoint of long-term storage stability of the ink composition. Of the polymeric dispersing agents still preferred are graft polymers and block polymers.

Particularly preferred polymeric dispersing agents are graft polymers comprising a polymer component containing at least one of recurring units represented by formulae (5) and (6) shown below and a polymer component containing, as a graft chain, at least a recurring unit represented by formula (7) shown below.

(5)

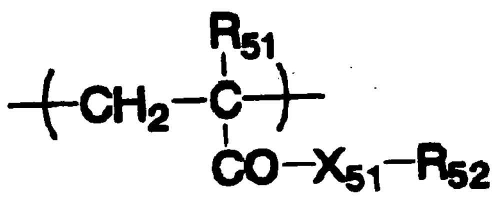

(6)

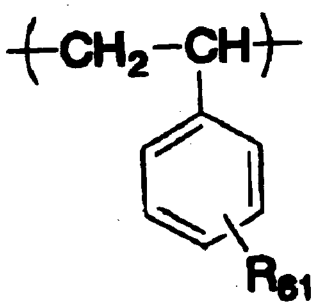

(7)

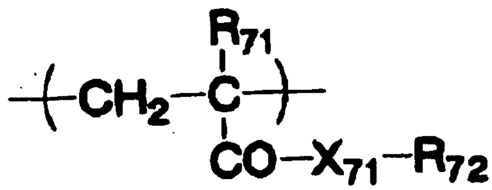

wherein $X_{51}$ represents an oxygen atom or -N ($R_{53}$)-; $R_{51}$ represents a hydrogen atom or a methyl group; $R_{52}$ represents a hydrocarbon group having 1 to 10 carbon atoms; $R_{53}$ represents a hydrogen atom or a hydrocarbon group having 1 to 10 carbon atoms; $R_{61}$ represents a hydrogen atom, a hydrocarbon group having 1 to 20 carbon atoms, a halogen atom, a hydroxyl group or an alkoxy group having 1 to 20 carbon atoms; $X_{71}$ represents an oxygen atom or -N($R_{73}$)-; $R_{71}$ represents a hydrogen atom or a methyl group; $R_{72}$ represents a hydrocarbon group having 4 to 30 carbon atoms; $R_{73}$ represents a hydrogen atom or a hydrocarbon group having 1 to 30 carbon atoms; the hydrocarbon group represented by $R_{52}$ or $R_{72}$ may contain an ether linkage, an amino group, a hydroxyl group or a halogen substituent.

The graft polymer can be obtained by polymerizing a radical polymerizable monomer providing the unit of formula (7) preferably in the presence of a chain transfer agent to prepare a polymer, introducing a polymerizable functional group into the terminal of the resulting polymer, and copolymerizing the functional polymer with a radical polymerizable monomer providing the unit of formula (5) or (6).

Radical polymerizable monomers providing the unit of formula (5) include (meth)acrylic esters, such as methyl (meth) acrylate, ethyl (meth)acrylate, propyl (meth) acrylate, butyl (meth)acrylate, hexyl (meth)acrylate, cyclohexyl (meth) acrylate, phenyl (meth) acrylate, benzyl (meth) acrylate, and2-hydroxyethyl (meth) acrylate; and (meth) acrylamides, such as N-methyl(meth)acrylamide, N-propyl(meth)acrylamide, N-phenyl (meth) acrylamide, and N,N-dimethyl (meth) acrylamide.

Radical polymerizable monomers providing the unit of formula (6) include styrene, 4-methylstyrene, chlorostyrene, and methoxystyrene.

Radical polymerizable monomers providing the unit of formula (7) include hexyl (meth) acrylate, octyl (meth) acrylate, 2-ethylhexyl (meth)acrylate, dodecyl (meth)acrylate, and stearyl (meth)acrylate.

Specific examples of the graft polymer are shown below.

[BZ-1]

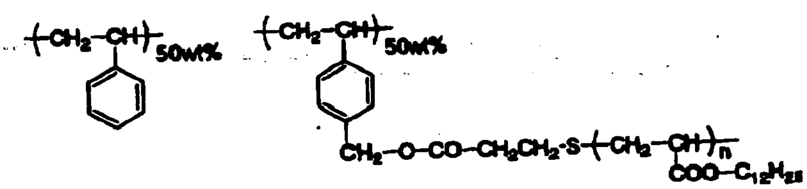

[BZ-2] 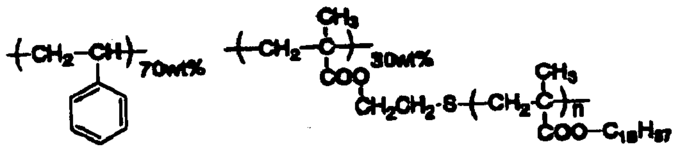

[BZ-3] 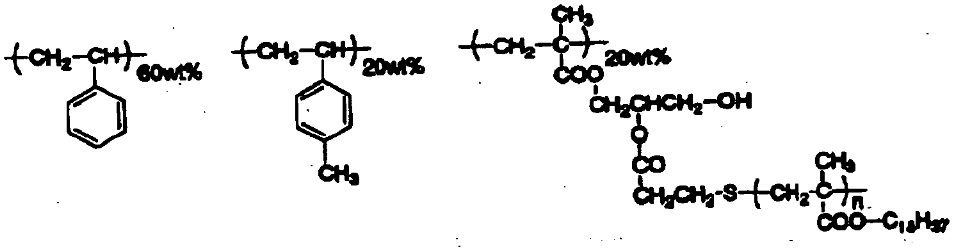

[BZ-4] 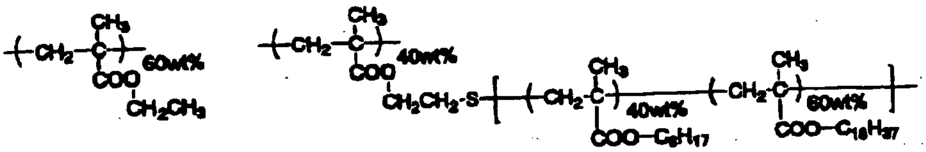

[BZ-5] 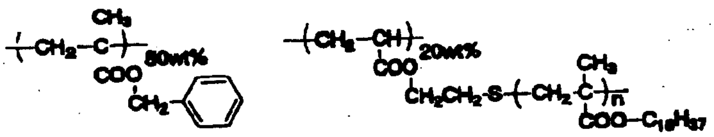

[BZ-6] 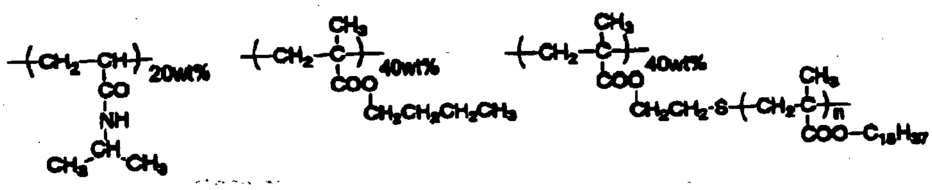

The graft polymer comprising a polymer component containing at least one of the recurring units of formulae (5) and (6) and a polymer component containing, as a graft chain, at least the constituting unit of formula (7) may contain other constituting components. The ratio of the polymer component containing the graft chain to the other polymer component(s) is preferably from 10/90 to 90/10. Within the recited range of the ratio, the polymer satisfactorily facilitates formation of particles with a desired particle size. The polymeric dispersing agents can be used either individually or in combination of two or more thereof.

The ink composition of the invention preferably contains a charge control agent. Suitable charge control agents include organic carboxylic acid metal salts, e.g., zirconium naphthenate and zirconium octenoate; organic carboxylic acid ammonium salts, e.g., tetramethylammonium stearate; organic sulfonic acid metal salts, e.g., sodium dodecylbenzenesulfonate and magnesium dioctylsulfosuccinate; organic sulfonic acid ammonium salts, e.g., tetrabutylammonium toluenesulfonate; polymers having a carboxyl group in the side chain thereof, such as an amine-modified styrene-maleic anhydride copolymer; polymers having a carboxylate anionic group at the side chain thereof, e.g., a stearyl methacrylate-tetramethylammonium methacrylate copolymer; polymers having a nitrogen atom in the side chain thereof, e.g., a styrene-vinylpyridine copolymer; and polymers having an ammonium group in the side chain thereof, e.g., a butyl methacrylate-N-(2-methacryloyloxyethyl)-N,N,N-trimethylamm onium tosylate. The electric charge given to the particles may be either

positive or negative. The charge control agent is preferably used in an amount of 0.0001% to 10% by weight based on the total ink composition.

The ink composition of the invention can contain other components, such as a preservative and a surface active agent for surface tension control.

According to the present invention, the process of producing the ink composition includes the step of wet dispersing the colorant and the coating polymer in the dispersing medium at a temperature lower than 10°C. Where the step of dispersing is carried out in two or more divided substeps, for example, a preliminary dispersing substep using a paint shaker, etc. and a final dispersing substep using equipment exerting stronger dispersing force, at least one of the substeps should be conducted at a dispersing system temperature lower than 10°C.

Although a lower dispersing system temperature makes the polymer more brittle, a preferred lower limit of the dispersing temperature is -20°C. A still preferred temperature range is from -10°C to 5°C. The dispersing system temperature can be controlled below 10°C by known means. For example, dispersing equipment is provided with a cooling jacket in which a coolant, e.g., water or an ethylene glycol aqueous solution, is circulated.

Beads for dispersing are preferably used in the step of wet dispersing. Useful beads include steel beads, glass beads, and beads of ceramics such as zirconia, titania, alumina or silicon nitride. The beads preferably have a diameter of 0.05 to 5 mm, still preferably 0.1 to 3 mm. In order to disperse the mixture into fine particles of desired size, the step of wet dispersing may be carried out in two or more divided substeps using different kinds and sizes of beads.

Equipment that can be used to perform the wet dispersing step includes a paint shaker, a kneader, a dissolver, a mixer, a high-speed disperser, a sand mill, a roll mill, a ball mill, an attritor, and a bead mill (Dynomill, see reference-1 cited above).

The mixture of the colorant and the coating polymer is prepared by dry blending. Equipment for the dry blending includes the above recited equipment for wet dispersing. It is desirable for the dry blended particles to have a length to width ratio of 1 to 5 and a volume average particle size to number average particle size ratio of 10 or smaller.

After completion of the step of wet dispersing, the disperse system is preferably subjected to a heat treatment after beads removal. The heating temperature is preferably higher than both the glass transition temperature and the softening point of the polymer. While the heating temperature is decided as appropriate for the kind of the polymer, it is preferably 40°C or higher, still preferably 45° to 120°C. The heating time is preferably 30 minutes to 10 hours.

The dispersed particles of the resulting dispersion (ink composition) preferably have a volume average particle size of from 0.7 to 5.0 μm, still preferably of from 0.7 to 3.0 μm. When the dispersion is subjected to the heat treatment, it is preferred that the volume average particle size after the heat treatment be at least 1.2 times, still preferably 1.5 times or more, that after completion of the step of wet dispersing.

The volume average particle size of the dispersed particles is measured by the centrifugal sedimentation method with, for example, an automatic particle size distribution analyzer of ultracentrifuge type (CAPA-700 manufactured by Horiba, Ltd.). The volume average particle size of the dispersed particles can be adjusted by selecting the kind and the amount of a dispersing agent and the equipment for wet dispersing.

As previously stated, an ink composition has conventionally been produced by kneading a colorant and a polymer under heat, dry grinding the mixture, and dispersing the ground mixture in a dispersing medium together with a dispersing agent into fine dispersed particles, and giving electrical charges to the dispersed particles by addition of a charge control agent. A conventional ink composition thus produced often causes a nozzle clogging problem due to adhesion of the particles to the inkjet head nozzle of an inkjet recording apparatus. A conventional ink composition also has poor storage stability such that the particles settle down when stored for a long time and are not re-dispersed by agitation.

The process of ink production according to the present invention includes the step of wet dispersing the colorant, the coating polymer, and the dispersing medium at a temperature lower than 10°C. At such low dispersing temperatures, the coating polymer has increasedbrittleness and breaks more easily, thereby minimizing exposure of the colorant (e.g., pigment) and release of solitary particles of the colorant. As a result, the interaction between particles due to the exposed colorant or the solitary colorant particles is suppressed, and the particles exhibit satisfactory charging characteristics, with the charges possessed by the colorant per se being shielded.

In general, fine particles resulting from wet dispersing in the presence of beads have the pigment exposed on their surface on account of the strong dispersing action of the beads and therefore show strong interaction among themselves. Such particles are liable to adhere to the inkjet head nozzles and to flocculate while stored. In the present invention, the pigment is prevented from being exposed or solely released by conducting the wet dispersing at a temperature lower than 10°C. The interaction between particles is thus suppressed. As a result, adhesion of the particles to the inkjet nozzles and sedimentation of the particles during storage occur less easily.

Addition of the charge control agent may be either in the step of wet dispersing or in the step of heat treating.

The particles of in the ink composition of the invention preferably have redispersibility of 50% to 100%, still preferably 70% to 100%. Accordingly, the ink composition having the particles dispersed in a dispersing medium has a redispersibility of 50% to 100%, preferably 70% to 100%, in the dispersing medium. The terminology "redispersibility"

as used herein denotes weight percent of a solid re-dispersed in a dispersing medium, the solid being obtained by evaporating a dispersion of particles in the medium to dryness. A redispersibility is measured as follows.

Measurement of redispersibility:

A dispersion (ink composition) weighing 10 g is spread in a petri dish and allowed to dry spontaneously at room temperature. Where Isopar G is used as a dispersing medium, the dispersion dries in one hour). Ten grams of the same dispersing medium is added to the resulting solid, and the mixture is left to stand for 30 minutes at room temperature. The mixture is filtered through a 42 μm nylon mesh, and the residue on the mesh is allowed to dry spontaneously. The redispersibility is calculated from equation:

$$\text{Redispersibility (\%)} = [(\text{weight of solid} - \text{weight of residue})/\text{weight of solid}] \times 100$$

The ink composition is preferably supplied as a set of an ink for initial filling and a replenisher ink so that a reduction in solid concentration of the ink for initial filling with use may be made up for by replenishing with the replenisher ink. The replenisher ink preferably has a higher solid concentration than the ink for initial filling.

The solid concentrations of the ink for initial filling and of the replenisher ink are not particularly limited. In a recommended embodiment, the solid concentration of the ink for initial filling ranges 1% to 40% by weight while that of the replenisher ink ranges 2% to 60% by weight, with the ratio of the latter to the former being in a range of from 1.05 to 10.0, preferably 1.1 to 7.0. Good ink ejection characteristics can be assured with a set of the ink compositions satisfying the recited conditions. Fulfillment of these conditions will also prevent mixing failure of the ink for initial filling and the replenisher ink from occurring. A preferred solid concentration of the ink for initial filling is 3% to 30% by weight, and that of the replenisher ink is 5% to 50% by weight.

The solid concentration of an ink composition is calculated from a change in mass between before and after heating the ink composition to remove volatile matter. For example, the ink composition is dried on a hot plate at 145°C for 2 hours, and a change in mass is measured.

To secure satisfactory ink ejection characteristics, the electrical conductivity at 20°C of the ink for initial filling is preferably 10 to 50,000 pS/cm (1 nS/m to 5,000 nS/m) , and that of the replenisher ink is preferably 50 to 100,000 pS/cm (5 nS/m to 10,000 nS/m). The replenisher ink preferably has a higher electrical conductivity than the ink for initial filling to maintain the ejection characteristics for an extended period of time. The electrical conductivity of the ink composition is adjusted by selecting the kinds and the amounts of the dispersing medium and the charge control agent.

The ink composition of the invention preferably has a viscosity of 0.5 to 50 mPa·s at 20°C. With the viscosity falling within that range, satisfactory ejection characteristics are obtained. The viscosity of the ink composition can be adjusted by the selection of the kinds and the amounts of the dispersing medium and the polymer components dissolved in the dispersing medium, such as a dispersing agent. A surface active agent may be added for viscosity control.

The ink composition of the invention is used for inkjet recording on a recording medium. The ink composition is suited for use in an electrostatic inkjet recording system utilizing an electrostatic field. In the electrostatic inkjet recording system, a voltage is applied between a control electrode and a back electrode positioned on the back side of the recording medium, whereby the charged particles in the ink composition are concentrated at an ejection position by an electrostatic force, and the ink composition is forced out of the ejection position toward the recording medium. When the charged particles have, for example a positive charge, the control electrode acts as a positive electrode, and the back electrode as a negative electrode. The same effect can be obtained by charging the recording medium instead of voltage application to the back electrode.

Methods for causing ink droplets to fly include a method in which ink is forced out of a tip of a needle like an injection needle, which can be used for recording with the ink composition of the invention. In the method, however, it is difficult to replenish charged particles lost due to the concentration and the ejection, which makes it difficult to stably continue recording for a long period of time. In this method, where the ink is circulated to forcedly supply the charged particles, the ink is overspilled from the tip of the injection needle. Accordingly, the meniscus shape at the tip of the needle, i.e., the ejection position is not stable, which makes stable recording difficult. Therefore, the method is suitable for recording for a short period of time.

In contrast, there is a method in which an ink composition is circulated without spillover of the ink composition from an ejection opening. For instance, a nozzle with an ejection opening has a control electrode formed around the opening and an ink guide disposed in the opening and directed to a recording medium. While ink is circulated in an ink chamber having the nozzle, a voltage is applied to the control electrode to cause droplets of concentrated ink to fly from

the tip of the ink guide. The method satisfies both the requirement for replenishing lost charged particles by ink circulation and the requirement for stable meniscus formation at the ejection position. Thus, the method enables stable recording for an extended period of time. Furthermore, since the ink has a significantly small contact area with the outside air at the ejection opening, evaporation of the solvent is minimized to stabilize the physical properties of the ink composition. Accordingly, the method is preferably used in the present invention.

An example of a configuration of an inkjet recording apparatus suitable for application of the ink composition according to the invention will be described below.

In Fig. 1 is shown an inkjet printer 1 for performing four color printing on one side of a recording medium. The inkjet printer 1 has a set of inkjet heads 2 for full color image formation, i.e., inkjet heads 2C, 2M, 2Y, and 2K for four colors, an ink circulation system 3 for supplying an ink to the inkjet heads 2 and recovering the ink from the inkjet heads 2, a head driver 4 for driving the inkjet heads 2 based on output from an external device (not shown), for example, a computer or RIP (raster image processor) , and a position control 5. The inkjet printer 1 also has a conveying belt 7 put over three rollers 6A, 6B, and 6C, a conveying belt position sensing unit 8 having an optical sensor, etc. which detects the position of the conveying belt 7 in its width direction, an electrostatic adsorption unit 9 for holding a recording medium P onto the conveying belt 7, and means for releasing the recording medium P from the conveying belt 7 after completion of printing (image formation) having a static eliminator 10 and a mechanically releasing tool 11. A pair of feed rollers 12 and a guide 13 for feeding the recording medium P from a paper stock (not shown) to the conveying belt 7 are disposed upstream the conveying belt 7. Downstream the conveying belt 7 are placed an image fixing unit 14 and a guide 15 for fixing the ink on the released recording medium P and sending the recording medium P to an output tray (not shown). A recording medium position sensor 16 is provided at a position opposite to the inkjet heads 2 with respect to the conveying belt 7. Inside the printer 1 is also provided a solvent recovery part having an exhaust fan 17 and a solvent vapor adsorbent 18 for collecting solvent vapor generated from the ink composition. Vapors inside the printer are thus freed of the solvent and released into open air through the solvent collecting part.

The pair of feed rollers 12 are disposed to have improved capability of feeding the recording medium. Known feed rollers can be used. Since the recording medium P often has dirt and paper dust attached thereto, it is desirable to remove the dirt and dust. The recording medium P thus fed by the feed rollers 12 is transferred to the conveying belt 7 through the guide 13. The back surface (preferably a metallic back surface) of the conveying belt 7 is connected to ground via the roller 6A. The recording medium thus conveyed is electrostatically adsorbed on the conveyingbelt with the electrostatic adsorption unit 9. In the embodiment shown in Fig. 1, the electrostatic adsorption is achieved by a scorotron corona charger connected to a negative high voltage power source. The recording medium P is electrostatically adhered to the conveying belt 7 with no lift and is uniformly charged over the entire surface thereof by the electrostatic adsorption unit 9. While in this particular embodiment the electrostatic adsorption unit serves not only for adsorption but also for charging the recording medium, these functions may be separately performed by separate units. The recording medium P thus charged is conveyed by the conveying belt 7 to the position of the set of inkjet heads, and recording signal voltage is superposed on the charged potential as bias to perform electrostatic inkjet image formation. The recording medium P having the ink image thereon is subjected to destaticization by the static eliminator 10 and released from the conveying belt 7 by the mechanically releasing tool 11. The released recording medium P is sent to the image fixing unit 14 where the ink image is fixed. The recording medium P is then delivered through the guide 15 to the output tray (not shown). The gas inside the printer 1 including the vapor of the ink solvent is introduced into the absorbent 18 by the exhaust fan 17 and driven out of the printer after being freed of the solvent vapor by the adsorbent 18. The inkjet recording apparatus that can be used to carry out image recording with the ink composition of the present invention is not limited to the above-described embodiment. The numbers, the shapes, and the relative positions of elements and units constituting the apparatus (e.g. , rollers and the charger) and the charging polarities can be selected as appropriate. While in the above embodiment four-color printing is conducted using four process colors, the process colors may be used in combination with photo inks and/or spot color inks.

The ink circulation system 3 has an ink tank, an ink circulator, an ink concentration controller, an ink temperature controller, and the like. The ink tank may have a stirrer.

The inkjet head 2 includes a single channel head, a multi-channel head, and a full-linehead. The running direction of the conveying belt 7 is the fast scanning direction.

Preferred for use in the invention is an inkjet head designed for an ink ejection system in which charged particles are electrophoresed in an ink flow channel to increase the ink concentration in the vicinity of a head opening to eject ink droplets with the increased concentration of the charged particle. The ink droplet is released from the opening mainly by the electrostatic attraction force exerted by the recording medium per se or a counter electrode disposed on the back side of the recording medium. Therefore, when the recording medium or the counter electrode is not in a position to face the head or when the recording medium or the counter electrode faces the head but with no voltage applied thereto, unintentional ejection of ink droplets, which would soil the inside of the apparatus, does not occur even if a voltage is accidentally applied or a shock is given to the head.

An inkjet head that is preferably used in the above-described inkjet recording apparatus is shown in Figs. 2

and 3. As shown in Figs. 2 and 3, and inkjet head 70 has an electrically insulating base plate 74 and a plurality of ejection parts 76 through which ink drops are ejected toward a recording medium P. The insulating base plate 74 constitutes the upper wall of an ink flow channel 72 in which a unidirectional ink flow Q is formed. Each of the ejection parts 76 is provided with an ink guide 78 for guiding an ink composition from the ink flow channel 72 into an ink drop G flying to the recording medium P. The base plate 74 has openings 75 through which the ink guides 78 stick out one for one. An ink meniscus 42 is formed between the ink guide 78 and the inner wall of the opening 75. A distance d between the tip of the ink guide 78 and the recording medium P is preferably about 200 to 1,000 μm. The ink guide 78 is fixed at the lower end thereof to a supporting bar 40.

The base plate 74 has an insulating layer 44 electrically insulating two ejection electrodes at a prescribed distance, a first ejection electrode 46 provided on the upper side of the insulating layer 44, an insulating layer 48 covering the first ejection electrode 46, a guard electrode 50 provided on the upper side of the insulating layer 48, and an insulating layer 52 covering the guard electrode 50. The base plate 74 also has a second ejection electrode 56 provided on the lower side of the insulating layer 44 and an insulating layer 58 covering the second ejection electrode 56. The guard electrode 50 is for protecting the adjacent ejection parts from the electrical influences by the voltage applied to the first ejection electrode 46 and the second ejection electrode 56.

The inkjet head 70 also has a floating electroconductive plate 62 that constitutes the bottom of the ink flow channel 72 in an electrically floating state. The floating electroconductive plate 62 works to electrophorese the positively charged ink particles (charged particles) in the ink flow channel 72 upward (i . e. , toward the recording medium) with an induced voltage steadily generated by a pulsing voltage applied to the first ejection electrode 46 and the second ejection electrode 56. The floating electroconductive plate 62 has formed on the surface thereof an electrically insulating coating film 64 for preventing the physical properties and the composition of the ink from being destabilized due to charge injection into the ink. The electrically insulating coating film 64 preferably has an electrical resistance of $10^{12}$ Ω·cm or higher, still preferably $10^{13}$ Ω·cm or higher. The electrically insulating coating film 64 is preferably corrosion resistant to the ink, whereby the floating electroconductive plate 62 is protected from corrosion by the ink. The lower side of the floating electroconductive plate 62 is covered with an insulating member 66. By this configuration, the floating electroconductive plate 62 is completely electrically isolated.

At least one floating electroconductive plate 62 is provided for each unit head (a group of openings for one color) . When there are, for example, four unit heads of C, M, Y and K, the unit heads each have at least one floating electroconductive plate. In other words, one floating electroconductive plate never serves for two head units, e.g., a head unit for a cyan ink composition and a head unit for a magenta ink composition in common.

As illustrated in Fig. 3, a prescribed voltage (for example, +100 V) is applied to the guard electrode 50 while the ink is circulated in the ink flow channel 72 to form an ink flow Q. A positive voltage is applied to the first ejection electrode 46, the second ejection electrode 56, and the recording medium P so as to form an electric field between the first and the second ejection electrodes 46 and 56 and the recording medium P such that the positively charged particles R in the ink droplet G flying from the opening 75 as guided with the ink guide 78 may be electrically attracted to reach the recording medium P. Where the distance d is 500 μm, for example, the voltage may be applied to create a potential difference of about 1 to 3.0 kV.

In this state, a pulsing voltage is applied to the first ejection electrode 46 and the second ejection electrode 56 according to image signals, whereby the ink droplet G with an increased charge particle concentration is ejected from the opening 75. Taking for instance, when the initial concentration of charged particles is 3% to 15%, the charged particle concentration of the ink droplet G will be 30% or more.

The voltage applied to the first ejection electrode 46 and the second ejection electrode 56 is previously adjusted so that the ink droplet G may be ejected only when a pulsing voltage is applied to both the first ejection electrode 46 and the second ejection electrode 56.

On applying a pulsing positive voltage in that way, the ink droplet G flies from the opening 75 as guided by the ink guide 78 and lands on the recording medium P. At the same time, a positive induced voltage is generated in the floating electroconductive plate 62 by the positive voltage applied to the firstejection electrode 46 and the secondejection electrode 56.

Although the voltage applied to the first ejection electrode 46 and the second ejection electrode 56 is pulsing, the voltage induced in the floating electroconductive plate 62 is substantially stationary. Therefore, the electric field formed between the floating electroconductive plate 62, the guard electrode 50, and the recording medium P exerts a force causing the positively charged particles R in the ink flow channel 72 to migrate upward. It follows that the concentration of the charged particles R increases in the vicinity of the base plate 74. Where the number of used ejection parts (i.e., channels for ejecting ink droplets) is large as in the case shown in Fig. 3, the number of charged particles required for ejection also increases. In such a case, the numbers of the first ejection electrodes 46 and the second ejection electrodes 56 used also increase to induce a higher induction voltage in the floating electroconductive plate 62, whereby the number of the charged particles R moving toward the recording medium increases.

While ink ejection has been described with respect to the case where the colored particles are positively

charged, the colored particles may be negatively charged. In that case, all the above-mentioned charging polarities are reversed.

The ink having landed on the recordingmedium is preferably fixed with an appropriate heater. Heaters for image fixation include contact heaters , e.g., aheatingroller, a heating block, and a heating belt; and non-contact heaters, e.g., a dryer, an infrared lamp, a visible light lamp, an ultraviolet lamp, and a hot air oven. The heater is preferably contiguous or integral with the inkjet recording apparatus. The temperature of the recording medium at the fixing is preferably 40° to 200°C to assure ease of fixing. The fixing time is preferably 1 msec to 20 seconds.

In the electrostatic inkjet recording system, the ink composition ejected as droplets has an increased concentration of the charged particles. That is, as recording goes on, the amount of the charged particles in the ink composition reduces, and the electrical conductivity of the ink composition decreases accordingly. The ratio of the electrical conductivity of the charged particles to that of the ink composition also changes. Moreover, because charged particles with larger sizes tend to be ejected preferentially over those having smaller sizes, the average particle size of the charged particles decreases with the progress of recording. The change in solids content of the ink composition also results in change in viscosity.

These changes in physical properties of the ink composition eventually result in ejection failure, reduction in optical density of recorded images, and feathering of ink. To avoid these problems, an ink composition having a higher concentration (a higher solids content) than the ink composition initially charged into the ink tank may be added as a replenisher ink. That is, reduction in concentration of charged particles can be prevented; the electrical conductivity of the ink composition can be maintained within a given range; and the average particle size of the charged particles and the viscosity of the ink composition can be maintained constant. Maintenance of the physical properties of the ink composition within certain ranges secures stability and uniformity of ink ejection for a prolonged period of time. Replenishment of the ink tank with a replenisher ink is preferably done, either mechanically or manually, based on the need calculated from the detected physical properties (e.g., electrical conductivity or optical density) of the ink composition in the ink tank. It is also possible to effect replenishment, either mechanically or manually, based on the necessary amount of the ink composition to be used as calculated from image data.

A wide variety of recording media can be used according to use. A printed output can be directly obtained by inkjet recording on paper, a plastic film, a metal, paper laminated or deposited with metal or a plastic film laminated or deposited with metal. Printing on a metallic substrate (e.g., an aluminum plate) with a roughened surface provides an offset printing plate. Printing on a plastic substrate provides a flexographic printing plate or a color filter for a liquid crystal display. The recording medium may have a flat surface, for example, a sheet form, or a three-dimensional shape, for example, a cylindrical form. The invention can also be applied to the fabrication of semiconductor devices and printed circuitboards by using a silicon wafer and a printed wiring board as a recording medium.

EXAMPLES

The present invention will now be illustrated in greater detail with reference to Examples, but it should be understood that the invention is not construed as being limited thereto.

EXAMPLE 1

An ink composition was prepared from the following materials.

(1) Cyan pigment (colorant): Phthalocyanine pigment, C.I. Pigment Blue 15:3 (LIONOL BLUE FG-7350, available from Toyo Ink Mfg. Co., Ltd.)

(2) Coating polymer: AP-1 represented by formula:

[AP−1]

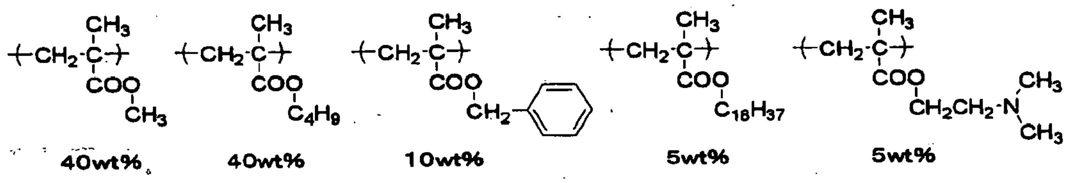

CoatingpolymerAP-1 was obtained by radical polymerizing methyl methacrylate, butyl methacrylate, benzyl methacrylate, dodecyl methacrylate, and 2-(N,N-dimethylamino)ethyl methacrylate using a known polymerization initiator. Coating polymer AP-1 had a weight average molecular weight of 19,000, a polydispersity index (weight average molecular weight/number average molecular weight) of 2.6, and a glass transition point (mid-point) of 50°C.

(3) Dispersing agent: BZ-2 represented by formula:

[BZ-2] 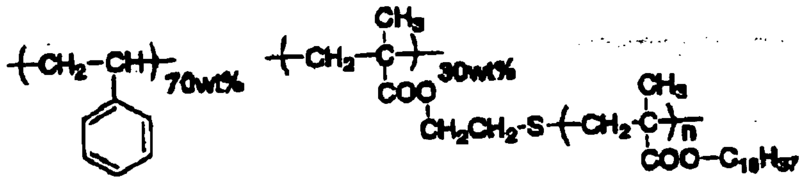

Dispersing agent BZ-2 was obtained by radical polymerizing stearyl methacrylate in the presence of 2-mercaptoethanol, allowing the resulting polymer to react with methacrylic anhydride to obtain a stearyl methacrylate polymer having a methacryloyl group at the terminal thereof (having a weight average molecular weight of 7,600), and radical polymerizing the resulting polymer with styrene. Dispersing agent BZ-2 had a weight average molecular weight of 110,000.

(4) Charge control agent: CT-1 represented by formula:

[CT-1] 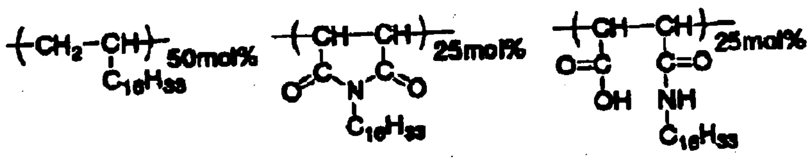

Charge control agent CT-1 was obtained by allowing a 1-octadecene/maleic anhydride copolymer to react with 1-hexadecylamine. Charge control agent CT-1 had a weight average molecular weight of 17,000.

(5) Dispersing medium: Isopar G (available from Exxon Corp.) Preparation of ink composition DC-1:

In a desktop kneader (PBV-0.1, manufactured by Irie Shokai Co., Ltd.) were charged 10 g of the cyan pigment and 20 g of coating polymer AP-1 and kneaded at a heater temperature set at 100°C for 2 hours. The resulting mixture weighing 30 g was coarsely ground in Trio Blender (manufactured by Trio Science Co., Ltd.) and then finely pulverized in Sample Mill SK-M10 (manufactured by Kyoritsu Riko Co., Ltd.). The pulverized product weighing 30 g was preliminarily dispersed in a paint shaker (manufactured by Toyo Seiki Seisaki-sho, Ltd.) together with 7.5 g of dispersing agent BZ-2, 75 g of Isopar G, and glass beads having a diameter of about 3.0 mm. After removing the glass beads, the mixture was further dispersed (reduced in particle size) together with zirconia ceramic beads having a diameter of about 0. 6 mm in a Dynomill (Type KDL, manufactured by Shinmaru Enterprises Corp.) at 1,5000 rpm at an inner temperature of 5°C for 6 hours and then at an inner temperature raised to 55°C for 3 hours. The zirconia ceramic beads were removed from the resulting dispersion, and 316 g of Isopar G and 0.5 g of charge control agent CT-1 were added thereto to obtain ink composition DC-1.

Physical properties of ink composition DC-1 were as follows.

The electrical conductivity of the ink composition at 20°C was found to be 161 nS/m as measured with an LCR meter (AG-4311, manufactured by Ando Electronic Co., Ltd.) and an electrode for liquid (Model LP-05, manufactured by Kawaguchi Electric Works Co., Ltd.) under the conditions of an applied voltage 5 V and a frequency of 1 kHz. The charged particles had a positive charge.

The volume average particle size of the charged particles was 1.0 μm as measured with a particle size distribution analyzer CAPA-700 (manufactured by Horiba, Ltd.) at a rotation speed of 5,000 rpm. The proportion of the particles of 0.2 μm or smaller was 1.0% by volume. The number average particle size was 0.15 μm. The viscosity of the ink composition was 1.5 mPa·s at 20°C as measured with a corn-plate viscometer (available from Tokyo Keiki Co., Ltd.). The redispersibility was 70%.

Inkjet printing was carried out using an inkjet printer shown in Figs. 1 through 3. The ink tank connecting to the inkjet head was filled with 100 g of ink composition DC-1. The inkjet head used was an 833-channel head of 150 dpi (three rows having a channel density of 50 dpi arranged in a staggered pattern) of the type shown in Fig. 2. A heat roller made of silicone rubber having a built-in 1 kW heater was used as a fixing unit. The ink tank was equipped with an

immersion heater and stirringblades as means for controlling the ink temperature. The ink temperature was maintained at 30°C with a thermostat and by rotating the stirring blades at 30 rpm. The stirring blades also served for preventing sedimentation and agglomeration of the dispersed particles. Lightweight coated paper of A2 size (420mm x 594mm) for offset printing was used as a recording medium. After dedusting the surface of the recording medium by suction with an air pump, the inkjet head was moved to the image forming position close to the recording medium. Image data to be recorded were transmitted to an image data operation and control unit. According to the image data, the ink composition was ejected with sequential movement of the inkjet head while the recording medium was conveyed on a running conveying belt to form an image with a resolution of 2,400 dpi. The conveying belt used was a belt prepared by laminating a metallic belt with a polyimide film, and a linear marker was provided near one edge of the belt along the running direction. The marker was optically read by a conveying belt position sensing unit, and a position control was driven during the image formation. The distance between the inkjet head and the recording medium was maintained at 0.5 mm based on output from an optical gap sensor. During the image formation, the surface potential of the recording medium was set at -1.5 kV, and a pulsing voltage of +500 V (with a pulse width of 50 μsec) was applied at a driving frequency of 10 kHz to conduct image recording.

Immediately after the image recording, the image was fixed by means of a heat roller. The temperature of the coated paper at the fixing was 90°C, and the contact time of the coated paper with the heat roller was 0.3 seconds. The image area per printed sheet was 15%.

After the above-described image recording was carried out on 15 sheets of the coated paper of A4 size (210mm x 297mm) per day for one week, the inkjet head was inspected for adhesion of particles to the openings.

Separately, the ink composition was allowed to stand at room temperature for one month and inspected for any sedimentation.

The results obtained are shown in Table 1 below.

COMPARATIVE EXAMPLE 1

Ink composition RC-1 was prepared and evaluated in the same manner as in Example 1, except that the dispersing (reduction into fine particles) in a Dynomill was performed at 2, 000 rpm with the inner temperature kept at 20°C for 4 hours and then at 55°C for 3 hours. The results of evaluation are shown in Table 1.

Ink composition RC-1 had a conductivity of 150 nS/m, a viscosity of 1.6 mPa·s, and a redispersibility of 30%. The charged particles had a volume average particle size of 0. 9 μm, and the proportion of the particles of 0.2 μm or smaller was 5.8% by volume.

TABLE 1

| | Example 1 | Comp. Example 1 |
|---|---|---|
| Ink Composition | DC-1 | RC-1 |
| Ink Ejection for 1 Wk | good with no clogging | ejectionfailuredue to ink particles adhered to the openings |
| 1Mth Preservability | sediment formed but redispersible by stirring | sediment formed and not redispersed by stirring |

EXAMPLE 2

Ink composition DM-1 was prepared and evaluated in the same manner as in Example 1, except for using, as a pigment, C.I. Pigment Red 57:1 (Brilliant Carmine 6B) (LIONOL Red FG-4213, available from Toyo Ink Mfg. Co., Ltd.). The results of evaluation are shown in Table 2.

EXAMPLE 3

Ink composition DY-1 was prepared and evaluated in the same manner as in Example 1, except for using, as a pigment, C.I. Pigment Yellow 74 (Hanza Brilliant Yellow 5GXB, available from Clariant Japan). The results of evaluation are shown in Table 2.

EXAMPLE 4

Ink composition DK-1 was prepared and evaluated in the same manner as in Example 1, except for using, as

a pigment, C.I. Pigment Black 7 (Carbon Black MA-100, available from Mitsubishi Chemical Corp.). The results of evaluation are shown in Table 2.

TABLE 2

| | Example 2 | Example 3 | Example 4 |
|---|---|---|---|
| Ink Composition | DM-1 | DY-1 | DK-1 |
| Volume Average Particle Size | 1.3 μm | 1.2 μm | 0.8 μm |
| Redispersi-bil ity | 70% | 75% | 80% |
| Ink Ejection for 1 Wk | good with no clogging of openings | | |
| Preservability for 1 Mth | sediment formed but redispersed by stirring | | |

COMPARATIVE EXAMPLES 2 TO 4

Ink compositions RM-1, RY-1, and RK-1 were prepared in the same manner as in Examples 2 to 4, respectively, except that the dispersing (reductionintofineparticles) in a Dynomill was performed at 2,000 rpm with the inner temperature kept at 20°C for 4 hours and then at 55°C for 3 hours. The results of evaluation are shown in Table 3 below.

TABLE 3

| | Comparative Example 2 | Comparative Example 3 | Comparative Example 4 |
|---|---|---|---|
| Ink Composition | RM-1 | RY-1 | RK-1 |
| Volume Average Particle Size | 1.4 μm | 1.2 μm | 0.9 μm |
| Redispersi-bil ity | 30% | 25% | 35% |
| Ink Ejection for 1 Wk | ejection failure due to adhesion of ink particles to the openings | | |
| Preservability for 1 Mth | sediment formed and not redispersed by stirring | | |

EXAMPLE 5

Ink composition DC-2 was prepared and evaluated in the same manner as in Example 1, except that the dispersing (reduction into fine particles) in a Dynomill was performed at 1,000 rpm with the inner temperature kept at 0°C for 7 hours and then at 55°C for 3 hours. The results of evaluation are shown in Table 4.

The ink composition had a conductivity of 166 nS/m, a viscosity of 1.5 mPa·s, and a redispersibility of 75%. The charged particles had a volume average particle size of 0. 9 μm, and the proportion of the particles of 0.2 μm or smaller was 1.0% by volume.

EXAMPLE 6

Ink composition DC-3 was prepared and evaluated in the same manner as in Example 1, except that the dispersing (reduction into fine particles) in a Dynomill was performed at 500 rpm with the inner temperature kept at 5°C for 3 hours and that the temperature was not elevated thereafter. The results of evaluation are shown in Table 4.

The ink composition had a conductivity of 182 nS/m, a viscosity of 1.5 mPa·s, and a redispersibility of 65%. The charged particles had a volume average particle size of 0. 7 μm, and the proportion of the particles of 0.2 μm or smaller was 0.9% by volume.

COMPARATIVE EXAMPLE 5

Ink composition RC-2 was prepared and evaluated in the same manner as in Example 1, except that the dispersing (reduction into fine particles) in a Dynomill was performed at 500 rpm with the inner temperature kept at 30°C for 3 hours and that the temperature was not elevated thereafter. The results of evaluation are shown in Table 4.

The ink composition had a conductivity of 205 nS/m, a viscosity of 1.8 mPa·s, and a redispersibility of 20%. The charged particles had a volume average particle size of 0.5 μm, and the proportion of the particles of 0.2 μm or smaller was 31% by volume.

TABLE 4

| | Example 5 | Example 6 | Comparative Example 5 |
|---|---|---|---|
| Ink Composition | DC-2 | DC-3 | RC-2 |
| Ink Ejection for 1 Wk | good with no clogging | | ejection failure due to adhesion of ink particles to the openings |
| Preservab-ili ty for 1 Mth | sediment formed but redispersed by stirring stirring | | sediment formed and not redispersed by stirring |

This application is based on Japanese Patent application JP 2004-346645, filed November 30, 2004, the entire content of which is hereby incorporated by reference, the same as if set forth at length.

## Claims

1. A process for producing an ink composition containing a dispersing medium and particles containing a colorant and a polymer, the process comprising: wet dispersing the colorant and the polymer in the dispersing medium at a temperature of lower than 10°C.

2. The process according to claim 1, further comprising: heating the dispersion from the wet dispersing.

3. The process according to claim 1, wherein the temperature is -20°C or higher and lower than 10°C.

4. The process according to claim 1, wherein the temperature is from -10°C to 5°C.

5. The process according to claim 2, wherein the heating is conducted at 40°C or higher.

6. The process according to claim 2, wherein the heating is conducted at from 45° to 120°C.

7. The process according to claim 1, wherein the dispersing medium has a volume resistivity of $10^{10}$ Ωcm or higher.

8. The process according to claim 1, wherein the dispersing medium is has a dielectric constant of 5 or less.

9. The process according to claim 1, wherein the dispersing medium is has a dielectric constant of 4 or less.

10. The process according to claim 1, wherein the dispersing medium is has a dielectric constant of 3.5 or less.

Fig. 1

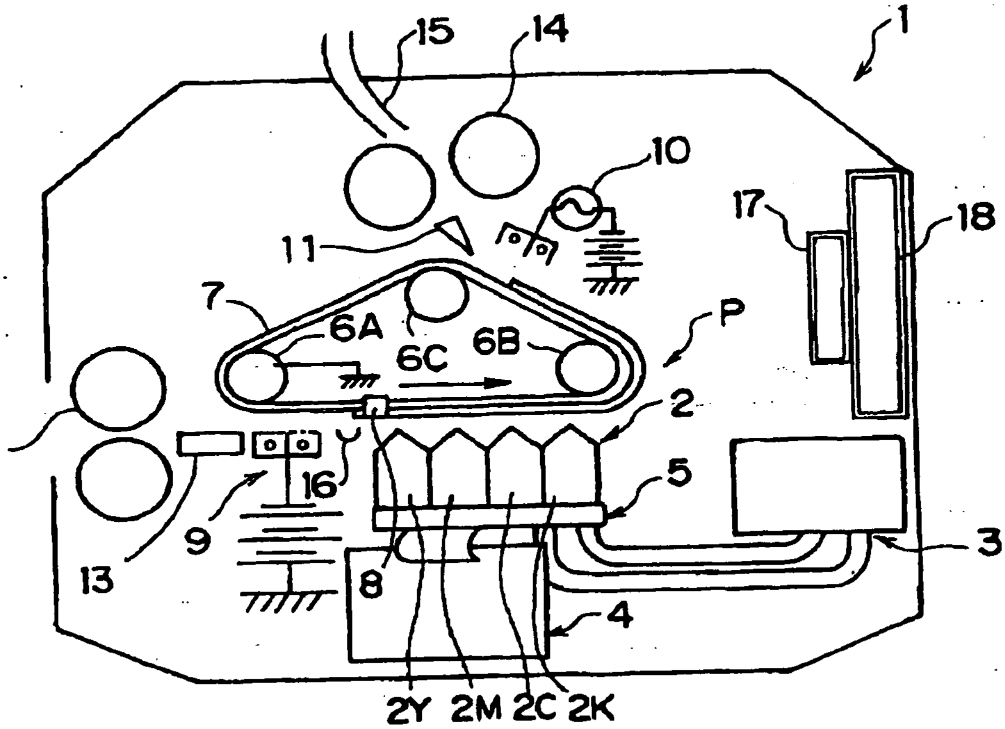

Fig. 2

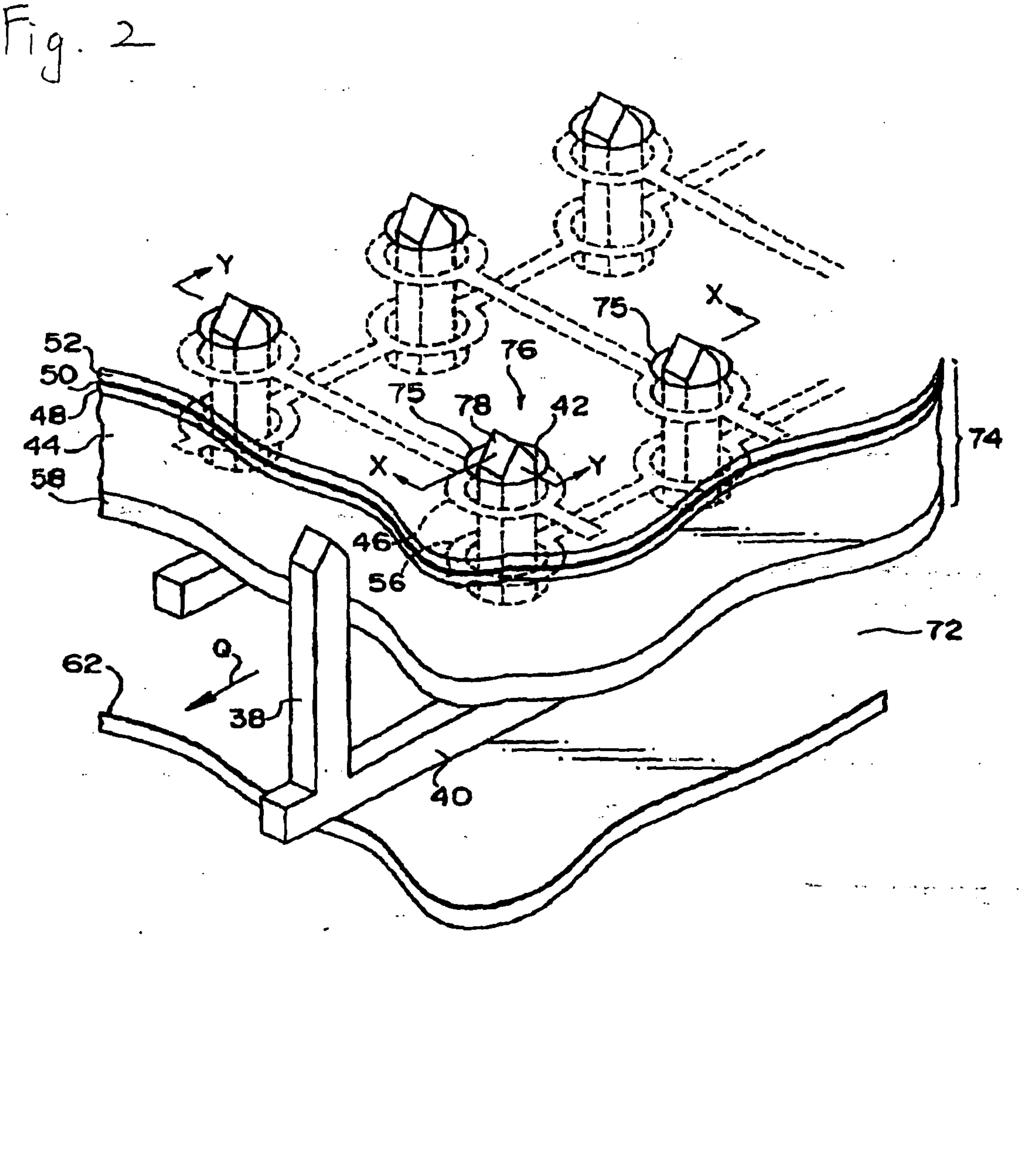

Fig. 3

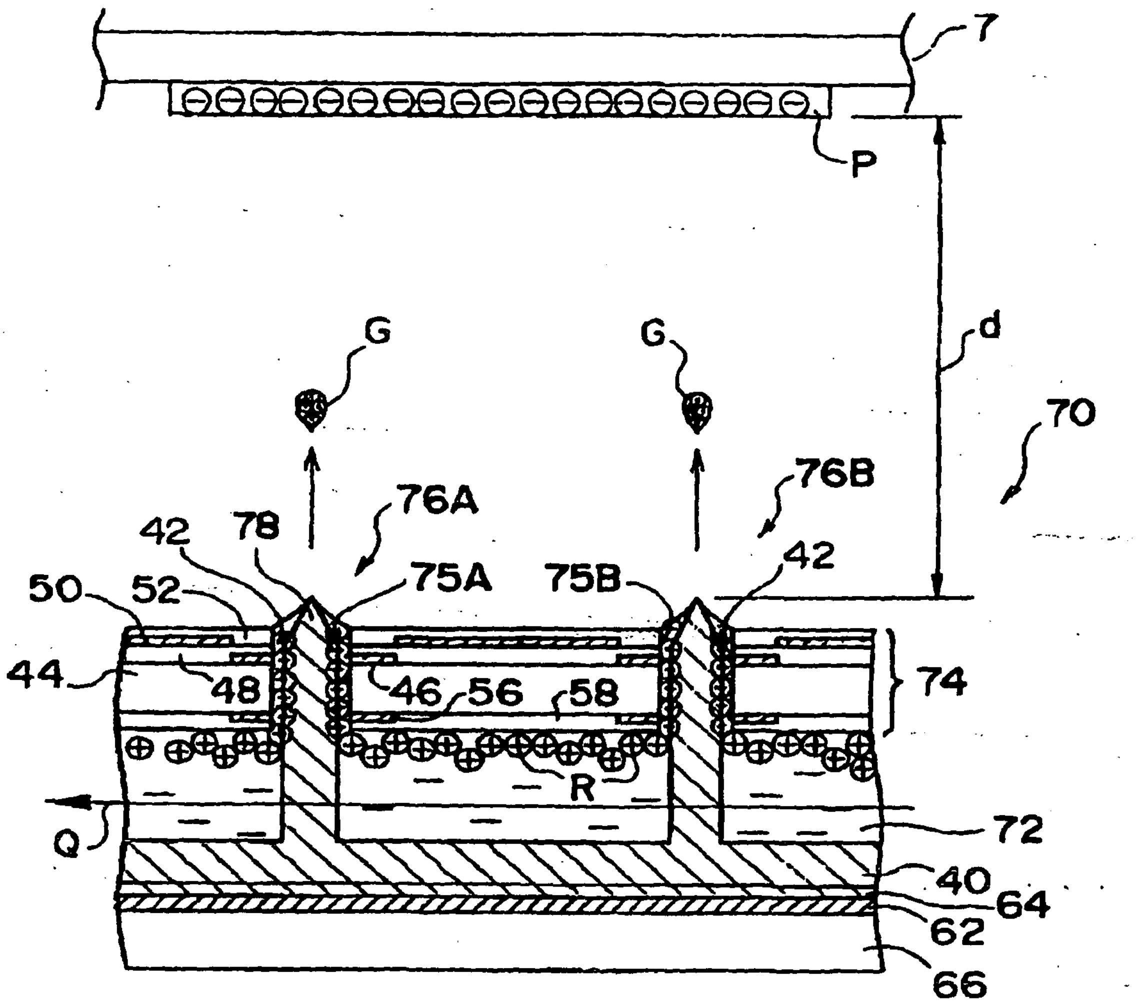
7
P
d
70
G
G
76A
76B
42
78
75A
75B
42
50
52
44
48
46
56
58
74
R
Q
72
40
64
62
66

European Patent Office

# EUROPEAN SEARCH REPORT

Application Number
EP 05 02 5881

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 1 471 121 A (FUJI PHOTO FILM CO., LTD) 27 October 2004 (2004-10-27) * examples * ----- | 1-10 | C09D11/00 |
| A | US 2004/068031 A1 (HORIE SEIJI ET AL) 8 April 2004 (2004-04-08) * examples * ----- | 1-10 | |

| TECHNICAL FIELDS SEARCHED (IPC) |
|---|
| C09D |

The present search report has been drawn up for all claims

1

| Place of search | Date of completion of the search | Examiner |
|---|---|---|
| Munich | 24 February 2006 | Zeslawski, W |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO.

EP 05 02 5881

This annex lists the patent family members relating to the patent documents cited in the above-mentioned European search report.
The members are as contained in the European Patent Office EDP file on
The European Patent Office is in no way liable for these particulars which are merely given for the purpose of information.

24-02-2006

| Patent document cited in search report | | Publication date | Patent family member(s) | | Publication date |
|---|---|---|---|---|---|
| EP 1471121 | A | 27-10-2004 | CN 1539639 | A | 27-10-2004 |
| | | | US 2004214920 | A1 | 28-10-2004 |
| US 2004068031 | A1 | 08-04-2004 | JP 2004115706 | A | 15-04-2004 |

EPO FORM P0459

For more details about this annex : see Official Journal of the European Patent Office, No. 12/82